# EUROPEAN PATENT APPLICATION

(11) **EP 4 700 560 A1**
(43) Date of publication of application: **25.02.2026**
(21) Application number: 25159340.6
(22) Date of filing: 21.02.2025
(51) Int. Cl.: G06F 3/12, G06F 3/0481, G05B 19/418, G06F 3/048

(54) **INFORMATION PROCESSING SYSTEM, INFORMATION PROCESSING METHOD, AND INFORMATION PROCESSING PROGRAM**

(30) Priority: 21.08.2024 JP 2024140065
(71) Applicant: FUJIFILM Business Innovation Corp., Minato-ku Tokyo (JP)
(72) Inventor: NOGUCHI, Daisuke, Yokohama-shi (JP); NAGASHIMA, Kazuki, Yokohama-shi (JP); SASAKI, Kimihiko, Yokohama-shi (JP); ARAKAWA, Kei, Yokohama-shi (JP); MARUYAMA, Kosuke, Yokohama-shi (JP)
(74) Representative: Haseltine Lake Kempner LLP

(57) **Abstract**

An information processing system includes a processor configured to: display, in a first display area on a display, multiple job elements representing details of jobs; associate the job elements with each other; and when a job element is selected, display an already-displayed job element, which is associated with the selected job element and which is currently displayed in the first display area, with a different display form than other job elements not associated with the selected job element, and display a non-displayed job element, which is associated with the selected job element and which is not currently displayed in the first display area, in a second display area on the display.

## Description

### Background

### (i) Technical Field

The present disclosure relates to an information processing system, an information processing method, and an information processing program.

### (ii) Related Art

Japanese Unexamined Patent Application Publication (Translation of PCT Application) No. 2018-501566 discloses a method including: employing at least one processor configured to execute computer-executable instructions stored in a memory to perform the following acts. The acts include an act of detecting selection of a data transformation job by way of a graphical user interface. The acts include determining one or more related jobs automatically on the basis of data dependencies between jobs in response to detecting the selection of the job. The acts include presenting a selected job and the one or more related jobs visually distinct from other jobs displayed on the graphical user interface.

Japanese Unexamined Patent Application Publication No. 2023-44514 discloses an information processing device provided with a processor. The processor associates job elements representing job details with each of steps for producing a product. The processor also displays the job elements in a schedule setup area on a screen. Furthermore, when any one of the job elements is selected from among the job elements, the processor displays each of the job elements representing the job in each step for producing the product that is associated with the selected job element in the schedule setup area, in the following form. The following form is a form that is different from the job elements associated with steps for producing another product different from the product.

### Summary

It is conceivable to have an information processing system provided with a processor, in which the processor causes multiple job elements representing details of jobs to be displayed in a display area of a display. For example, the processor associates job elements with each other. For example, when a job element is selected, the processor executes a process causing an already-displayed job element, which is associated with the selected job element and which is currently displayed in the display area, to be displayed with a different form than other job elements. The other job elements are job elements not associated with the selected job element.

In this situation, if the processor executes only the above process when a job element is selected, a user may have difficulty recognizing the job element associated with the selected job element.

Accordingly, it is an object of the present disclosure to facilitate user recognition of a job element associated with a selected job element, as compared to the case where, when a job element is selected, the processor executes only a process causing a job element which is associated with the selected job element and which is currently displayed in the display area to be displayed with a different form than other job elements not associated with the selected job element.

According to a first aspect of the present disclosure, there is provided an information processing system comprising a processor configured to: display, in a first display area on a display, a plurality of job elements representing details of jobs; associate the job elements with each other; and when a job element is selected, display an already-displayed job element, which is associated with the selected job element and which is currently displayed in the first display area, with a different display form than other job elements not associated with the selected job element, and display a non-displayed job element, which is associated with the selected job element and which is not currently displayed in the first display area, in a second display area on the display.

According to a second aspect of the present disclosure, in the first aspect, the first display area includes at least a schedule area for displaying the status of job elements that are assigned in an execution schedule of equipment capable of executing the jobs, the non-displayed job element includes a first job element that is displayable in the schedule area by execution of a modify process to modify a period displayed in the schedule area and a second job element that is not displayable in the schedule area, even by execution of the modify process, and the processor is configured to display the first job element and the second job element in the second display area, with different display forms.

According to a third aspect of the present disclosure, in the first or second aspect, the processor is configured to, when a job element is selected, further display the already-displayed job element in the second display area.

According to a fourth aspect of the present disclosure, in the third aspect, the processor is configured to, when a job element is selected, display the already-displayed job element in the second display area, with the display form for the first display area.

According to a fifth aspect of the present disclosure, in the fourth aspect, the first display area includes a schedule area for displaying the status of job elements that are assigned in an execution schedule of equipment capable of executing the jobs, and an unassigned area for displaying job elements that are not assigned in the execution schedule.

According to a sixth aspect of the present disclosure, in the fifth aspect, the processor is configured to display an assigned job element that is assigned in the execution schedule and an unassigned job element that is not assigned in the execution schedule in the second display area, with different display forms.

According to a seventh aspect of the present disclosure, in any one of the third to sixth aspects, the processor is configured to display the already-displayed job element and the non-displayed job element in the second display area, with different display forms.

According to an eighth aspect of the present disclosure, in any one of the first to seventh aspects, the processor is configured to display the job elements in a set order and in an arrangement in a predetermined direction in the second display area.

According to a ninth aspect of the present disclosure, in any one of the first to eighth aspects, the first display area includes a schedule area for displaying the status of job elements that are assigned in an execution schedule of equipment capable of executing the jobs, and the processor is configured to, when a job element in the second display area is selected and the selected job element is not currently displayed in the schedule area, change the period displayed in the schedule area so that the relevant job element is displayed in the schedule area.

According to a 10th aspect of the present disclosure, in the ninth aspect, the processor is configured to, when a job element in the second display area is selected and all job elements associated with the selected job element are not currently displayed in the schedule area, change the period displayed in the schedule area so that all relevant job elements are displayed in the schedule area.

According to an 11th aspect of the present disclosure, in the ninth or 10th aspect, the processor is configured to, when a job element is selected in the second display area and the selected job element is an already-displayed job element, display the relevant already-displayed job element with a different display form than other already-displayed job elements.

According to a 12th aspect of the present disclosure, in any one of the first to 11th aspects, the processor is configured to, when a job element is selected and all job elements associated with the selected job element are currently displayed in the first display, hide the second display area.

According to a 13th aspect of the present disclosure, there is provided an information processing method including: displaying, in a first display area on a display, a plurality of job elements representing details of jobs; associating the job elements with each other; and when a job element is selected, displaying an already-displayed job element, which is associated with the selected job element and which is currently displayed in the first display area, with a different display form than other job elements not associated with the selected job element, and displaying a non-displayed job element, which is associated with the selected job element and which is not currently displayed in the first display area, in a second display area on the display.

According to a 14th aspect of the present disclosure, there is provided an information processing program causing a computer to execute a process comprising: displaying, in a first display area on a display, a plurality of job elements representing details of jobs; associating the job elements with each other; and when a job element is selected, displaying an already-displayed job element, which is associated with the selected job element and which is currently displayed in the first display area, with a different display form than other job elements not associated with the selected job element, and displaying a non-displayed job element, which is associated with the selected job element and which is not currently displayed in the first display area, in a second display area on the display.

According to the first aspect of the present disclosure, user recognition of a job element associated with a selected job element is facilitated, as compared to the case where, when a job element is selected, the processor executes only a process causing a job element which is associated with the selected job element and which is currently displayed in the display area to be displayed with a different form than other job elements not associated with the selected job element.

According to the second aspect of the present disclosure, the user more easily distinguishes between the first job element and the second job element, as compared to the case where the processor displays the first job element and the second job element in the second display area, with the same display form.

According to the third aspect of the present disclosure, the user more easily recognizes the already-displayed job element, as compared to the case where, when a job element is selected, the processor displays only a non-displayed job element in the second display area.

According to the fourth aspect of the present disclosure, the user more easily recognizes the commonality between the already-displayed job element displayed in the first display area and the already-displayed job element displayed in the second display area, as compared to the case where the processor displays the already-displayed job element in the second display area, with a different display form than the display form in the first display area.

According to the fifth aspect of the present disclosure, the user more easily recognizes already-displayed job elements displayed in each of the schedule area and the unassigned area, as compared to the case where the first display area includes only the schedule area.

According to the sixth aspect of the present disclosure, the user more easily distinguishes between the assigned job element and the unassigned job element, as compared to the case where the processor displays the assigned job element and the unassigned job element in the second display area, with the same display form.

According to the seventh aspect of the present disclosure, the user more easily distinguishes between the already-displayed job element and the non-displayed job element, as compared to the case where the processor displays the already-displayed job element and the non-displayed job element in the second display area, with the same display form.

According to the eighth aspect of the present disclosure, the user more easily recognizes a job element associated with a selected job element, as compared to the case where the processor displays the job elements in any order and in an arrangement in any direction.

According to the ninth aspect of the present disclosure, the user more easily recognizes the relevant job element, as compared to the case where, when a job element in the second display area is selected and the selected job element is not currently displayed in the schedule area, the processor maintains the non-display of the relevant job element in the schedule area.

According to the 10th aspect of the present disclosure, the user more easily recognizes the relevant job elements, as compared to the case where, when a job element in the second display area is selected and not all job elements associated with the selected job element are currently displayed in the schedule area, the processor displays only some of the relevant job elements in the schedule area.

According to the 11th aspect of the present disclosure, the user more easily recognizes the relevant already-displayed job element, as compared to the case where, when a job element 28 is selected in the second display area and the selected job element is an already-displayed job element, the processor maintains the display of the relevant already-displayed job element.

According to the 12th aspect of the present disclosure, the first display area is expanded on the display, as compared to the case where the processor keeps displaying the second display area.

According to the 13th aspect of the present disclosure, user recognition of a job element associated with a selected job element is facilitated, as compared to the case of, when a job element is selected, executing only a process causing a job element which is associated with the selected job element and which is currently displayed in the display area to be displayed with a different form than other job elements not associated with the selected job element.

According to the 14th aspect of the present disclosure, user recognition of a job element associated with a selected job element is facilitated, as compared to the case where, when a job element is selected, the computer executes only a process causing a job element which is associated with the selected job element and which is currently displayed in the display area to be displayed with a different form than other job elements not associated with the selected job element.

### Brief Description of the Drawings

An exemplary embodiment of the present disclosure will be described in detail based on the following figures, wherein:
Fig. 1 is a schematic diagram illustrating an example of a production system according to the exemplary embodiment;
Fig. 2 is a block diagram illustrating an example of a functional configuration of a production management system according to the exemplary embodiment;
Fig. 3 is a schematic diagram illustrating an example of a schedule screen according to the exemplary embodiment;
Fig. 4 is a schematic diagram illustrating a state in which an association list area is displayed on a schedule screen according to the exemplary embodiment;
Fig. 5 is a schematic diagram illustrating a state in which all job elements displayed by an association list area are displayed in a schedule area on a schedule screen according to the exemplary embodiment;
Fig. 6 is a flowchart illustrating an example of the flow of a first display process executed by a production management system according to the exemplary embodiment;
Fig. 7 is a flowchart illustrating an example of the flow of a second display process executed by a production management system according to the exemplary embodiment; and
Fig. 8 is a flowchart illustrating an example of the flow of an exemplary modification of a second display process executed by a production management system according to the exemplary embodiment.

### Detailed Description

Hereinafter, an exemplary embodiment of the present disclosure will be described on the basis of the drawings.

### <Production system 1>

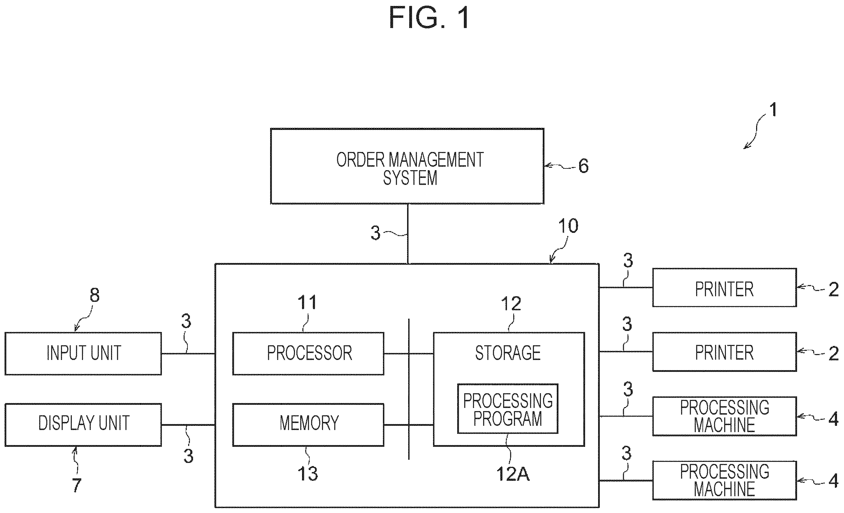

First, a production system 1 according to the exemplary embodiment will be described. Fig. 1 is a schematic diagram illustrating the production system 1 according to the exemplary embodiment.

The production system 1 is a system for producing products (specifically printed material). In the exemplary embodiment, the production system 1 receives an order for producing printed material, generates a production plan, and equipment produces the printed material in accordance with the production plan.

The production of printed material is one example of a job. The production of printed material is a concept that encompasses each step to be executed to produce printed material. The printed material may be any of books, booklets, and flyers, for example.

Specifically, as illustrated in Fig. 1, the production system 1 is provided with multiple printers 2, multiple processing machines 4, an order management system 6, a display unit 7, an input unit 8, and a production management system 10.

As illustrated in Fig. 1, the components of the production system 1 are connected by communication lines 3. The communication lines 3 use wired lines, wireless channels, or both, for example. Communication lines using wireless channels may use the Internet or an intranet, for example. Hereinafter, each component of the production system 1 will be described.

Note that the product to be produced is not limited to the example of printed material and may be some other industrial product, or may be a product produced by equipment. In the present disclosure, a job is not limited to the production of printed material and may also be the production of a product other than printed material, or other tasks such as control and/or manipulation. Consequently, a production system according to an exemplary embodiment of the present disclosure may also be a system that produces products other than printed material. A system according to an exemplary embodiment of the present disclosure may also be a job system for executing jobs that are not associated with the production of products.

### <Printers 2 and processing machines 4>

The printers 2 and processing machines 4 are examples of equipment capable of executing jobs. The multiple printers 2 are pieces of equipment used to print onto recording media. The multiple processing machines 4 are pieces of equipment used to process the recording media on which printing has been performed. The processing machines 4 may be, among other things, cutting machines for cutting the recording media, binding machines for binding the recording media, and hole-punching machines for punching holes into the recording media. In the following, the printers 2 and processing machines 4 may be collectively referred to as the equipment 2, 4.

### <Order management system 6>

The order management system 6 is a system that manages information (hereinafter referred to as production information) related to the production of printed material ordered by a customer. The order management system 6, upon receiving an order for the production of printed material from a customer, sends production information regarding the printed material to the production management system 10 via the communication line 3.

### <Display unit 7 and input unit 8>

The display unit 7 is an example of a display, and is a component that displays presentation information to be presented to a user. Specifically, in one example, the display unit 7 is configured as a liquid crystal display (LCD) panel. Note that the display unit 7 is not limited to an LCD panel and may also be an organic light-emitting diode (OLED) display panel or any other device capable of displaying presentation information to be presented to a user.

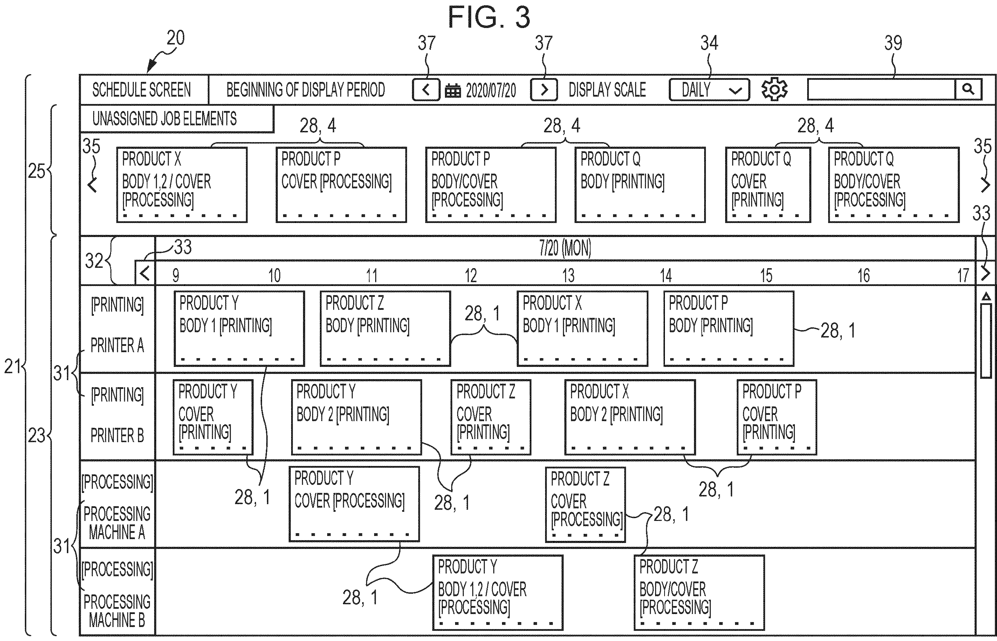

The display screens to be displayed by the display unit 7 include a schedule screen 20 (see Figs. 3 to 5). The schedule screen 20 is a screen indicating an execution schedule of the equipment 2, 4 (that is, the printers 2 and processing machines 4). Job elements 28 are displayed on the schedule screen 20 to indicate the details of jobs to be executed by the equipment 2, 4. Specific modes of the schedule screen 20 will be described later.

The input unit 8 is a component that accepts instructions entered by a user. Specifically, in one example, the input unit 8 is configured as a pointing device, such as a mouse, and one or more input keys, such as a keyboard.

Note that the input unit 8 is not limited to a pointing device and input keys, and may also be configured as a touch panel or any other device capable of accepting instructions entered by a user.

### <Production management system 10>

The production management system 10 is an example of an information processing system, and is a system that manages the production of printed material. The production management system 10 includes a function causing the display unit 7 to display various screens, including the schedule screen 20 (see Figs. 3 to 5). Note that the production system 1 may be understood as one example of an information processing system.

Specifically, the production management system 10 functions as a computer and includes a processor 11, storage 12, and a memory 13, as illustrated in Fig. 1.

For the processor 11, a general-purpose processor such as a central processing unit (CPU) is used, for example.

The storage 12 stores various programs, including a processing program 12A, and various data. The storage 12 is realized specifically by a recording device such as a hard disk drive (HDD), a solid-state drive (SSD), or flash memory. Moreover, the storage 12 is not limited to being configured as a single device, and may also be configured as multiple devices provided in physically remote locations. Note that the processing program 12A is one example of an information processing program.

The memory 13 is a work area that the processor 11 uses to execute various programs, and temporarily records various programs or various data when the processor 11 executes a process. The processor 11 reads out various programs, including the processing program 12A, from the storage 12 into the memory 13, and executes the programs using the memory 13 as a work area.

In the production management system 10, the processor 11 executes the processing program 12A to thereby realize various functions for executing predetermined processing. Hereinafter, a functional configuration achieved through cooperation between the processor 11 serving as a hardware resource and the processing program serving as a software resource will be described.

### <Functional configuration of production management system 10>

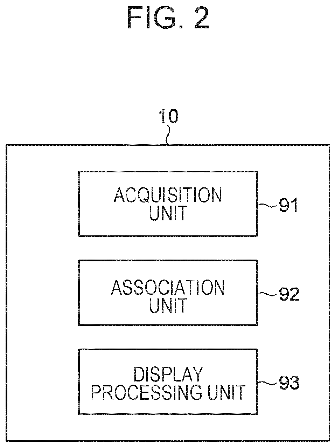

Fig. 2 is a block diagram illustrating an example of a functional configuration of the production management system 10 according to the exemplary embodiment. In one example, as illustrated in Fig. 2, the production management system 10 is provided with an acquisition unit 91, an association unit 92, and a display processing unit 93.

### <Acquisition unit 91 and association unit 92>

The acquisition unit 91 acquires various information. The information may be information regarding job details pertaining to job elements 28 displayed on the schedule screen 20 (see Figs. 3 to 5), instruction information entered via the input unit 8, and the like. The instruction information entered via the input unit 8 may be instruction information entered on the schedule screen 20 (see Figs. 3 to 5).

The association unit 92 associates job elements 28 with each other. In the exemplary embodiment, as one example, the association unit 92 associates job elements 28 for each printed material to be produced. That is, the association unit 92 associates job elements 28 pertaining to a series of job steps to be executed when producing specific printed material. For example, in the case where a printing step A1, a printing step A2, and a binding step A3 are to be executed when producing printed material that includes a cover A and a body A, the association unit 92 associates job elements 28 pertaining to each of the printing step A1, the printing step A2, and the binding step A3. The printing step A1 is a step for printing the cover A, for example. The printing step A2 is a step for printing the body A, for example. The binding step A3 is a step for binding the printed cover A and body A, for example.

In the exemplary embodiment, the association unit 92 associates job elements 28 for each product, but is not limited thereto as the association according to the present disclosure. For example, the association unit 92 may also associate job elements 28 for each order-placing party that places an order for a product. Also, in the case where there are multiple managers of the execution schedule, the association unit 92 may associate job elements 28 for each manager. In this way, the association unit 92 is capable of associating job elements 28 on the basis of a predetermined criterion. Job elements extracted by a search based on a set search condition may also be associated. For example, a search may be performed according to a search condition such as a keyword, a job attribute, or a tag attached to jobs, and multiple jobs extracted by the search may be associated. The search may be performed using a search command 39, for example.

### <Display processing unit 93>

The display processing unit 93 displays the schedule screen 20 (see Figs. 3 to 5) and controls the display of the schedule screen 20.

The schedule screen 20 is a screen indicating an execution schedule of the equipment 2, 4. The display processing unit 93 displays, on the schedule screen 20, multiple job elements 28 indicating the details of jobs to be executed by the production system 1. In the exemplary embodiment, the job elements 28 represent job details about individual production steps for printed material, with each representing the details of a job that is executable using one piece of equipment 2, 4.

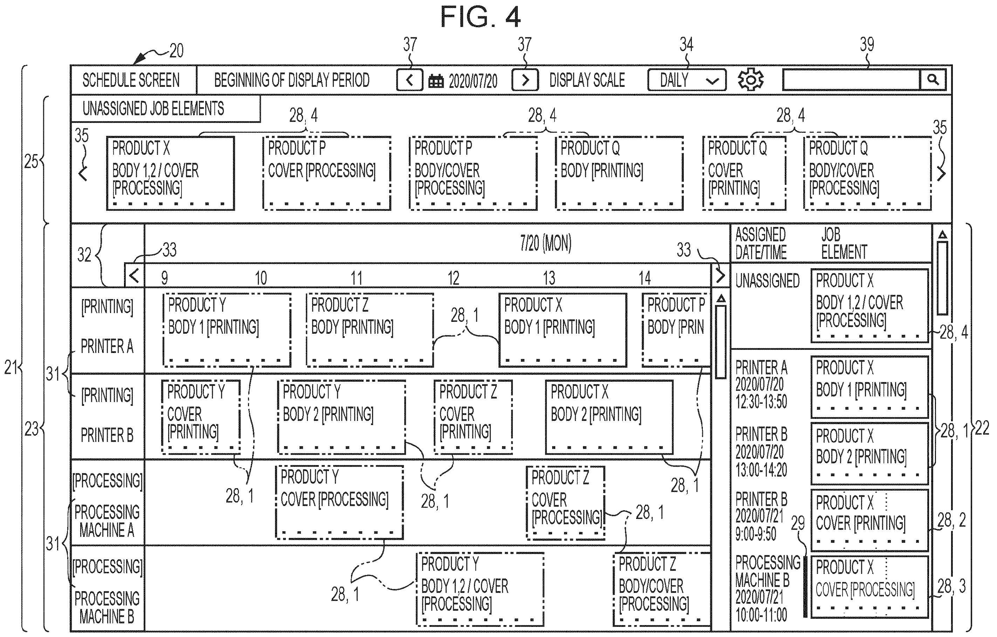

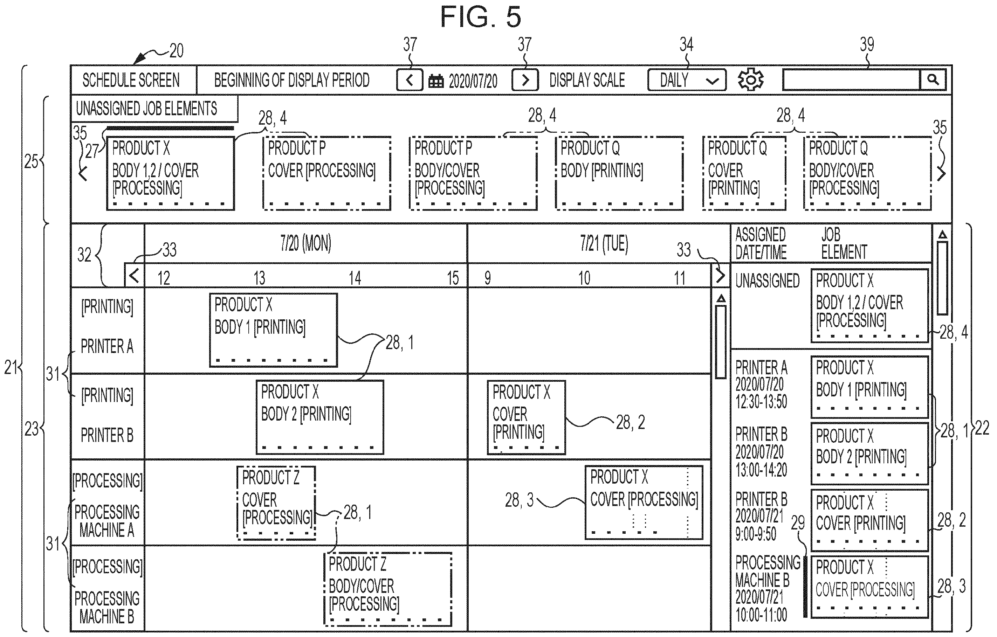

As illustrated in Figs. 3 to 5, in one example, the schedule screen 20 specifically includes a schedule area 23, an unassigned area 25, and an association list area 22 (see Figs. 4 and 5). The schedule area 23 is an area for displaying the status of job elements 28 assigned in the execution schedule of the equipment 2, 4. That is, the schedule area 23 is an area for displaying job elements 28 (hereinafter, assigned job elements 28) that have been assigned to the execution schedule of the equipment 2, 4.

The unassigned area 25 is an area for displaying job elements 28 (hereinafter referred to as unassigned job elements 28) that have not been assigned to the execution schedule of the equipment 2, 4.

The association list area 22 is an area for displaying, when a job element 28 is selected, a non-displayed job element 28 which is associated with the selected job element 28 and which is not currently displayed in the schedule area 23 or the unassigned area 25.

Note that a display area 21, which includes the schedule area 23 and the unassigned area 25 but not the association list area 22, is one example of a first display area. However, the schedule area 23 and the unassigned area 25 themselves may also be understood as one example of the first display area. The association list area 22 is one example of a second display area.

### <Display of job elements 28 in schedule area 23 and unassigned area 25>

The association unit 92 displays, in the schedule area 23 of the schedule screen 20, job elements 28 assigned to the execution schedule of the equipment 2, 4.

As illustrated in Figs. 3 to 5, for example, in the schedule area 23, equipment information 31 indicating each piece of equipment 2, 4 is displayed in an arrangement in the vertical direction on the schedule screen 20. Additionally, a date and time 32 indicating the execution schedule of the equipment 2, 4 is displayed in an upper portion to the right of the equipment information 31. Additionally, the job elements 28 assigned to the execution schedule for each piece of equipment 2, 4 are displayed to the right of the equipment information 31 and below the date and time 32. The date and time 32 is one example of a period. Note that in Figs. 3 to 5, the execution schedule of the equipment 2, 4 is indicated in units of hours, but is not limited thereto. For example, in the case where the job execution schedule is managed in units such as any of days, minutes, or seconds, the execution schedule may also be indicated in the same units.

Note that the assignment of job elements 28 to the execution schedule of the equipment 2, 4 may be executed according to instructions given by a client, input instructions given by a user, automatic assignment using machine learning, or the like. In the production system 1, when a job element 28 is assigned to the execution schedule of any piece of equipment 2, 4, the job pertaining to the relevant job element 28 is executed by the relevant piece of equipment 2, 4 according to the schedule.

When a modify operation is performed to modify the date and time 32 displayed in the schedule area 23 on the schedule screen 20, the display processing unit 93 executes a process (hereinafter referred to as the modify process) to modify the date and time 32 displayed in the schedule area 23. As a result, it is possible to display a date and time 32 not currently displayed in the schedule area 23 and the job elements 28 assigned at that date and time 32.

The modify process may be a process to shift the currently displayed date and time 32 (hereinafter referred to as the shift process), or a process to enlarge or reduce the timescale of the currently displayed date and time 32 (hereinafter referred to as the scaling process).

For example, the shift process may involve shifting the currently displayed date and time from 7/20 to 7/21. For example, the shift process may involve shifting the currently displayed time window from "9:00-17:00" to "10:00-18:00". The modify operation for the shift process may be a scroll operation of moving the date and time 32 on the schedule screen 20, for example. The shifting of the date and time is executed by operating scroll buttons 37, for example. The shifting of the time window is executed by operating scroll buttons 33, for example.

For example, the scaling process may involve enlarging the currently displayed period from 1 day to 2 days. The scaling process may also involve reducing the currently displayed period from 2 days to 1 day. The modify operation for the scaling process may be an operation involving a setting button 34 for setting the display scale. Note that the scaling process may also involve enlarging the currently displayed time window from "9:00-17:00" to "7:00-19:00". The scaling process may also involve reducing the currently displayed time window from "9:00-17:00" to "10:00-16:00".

The display processing unit 93 displays, in the unassigned area 25 of the schedule screen 20, job elements 28 not assigned to the execution schedule of the equipment 2, 4. In the unassigned area 25, unassigned job elements 28 are displayed in an arrangement in the horizontal direction, for example. When an unassigned job element 28 is assigned to the execution schedule of the equipment 2, 4, the relevant job element 28 is removed from the unassigned area 25 and displayed in the schedule area 23.

When a scroll operation is performed to scroll the job elements 28 displayed in the unassigned area 25 on the schedule screen 20, the display processing unit 93 executes a scroll process to scroll the job elements 28. As a result, it is possible to display job elements 28 not currently displayed in the unassigned area 25. The scroll operation is executed by operating scroll buttons 35, for example.

In the exemplary embodiment, the job elements 28 displayable on the schedule screen 20 are job elements 28 of the following types (1) to (6).
(1) An assigned job element 28 currently displayed in the schedule area 23 (hereinafter referred to as job element 28(1))
(2) An assigned job element 28 which is not currently displayed in the schedule area 23, but which is displayable in the schedule area 23 by execution of the modify process (hereinafter referred to as job element 28(2))
(3) An assigned job element 28 which is not displayable in the schedule area 23, even by execution of the modify process (hereinafter referred to as job element 28(3))
(4) An unassigned job element 28 currently displayed in the unassigned area 25 (hereinafter referred to as job element 28(4))
(5) An unassigned job element 28 which is not currently displayed in the unassigned area 25, but which is displayable in the unassigned area 25 by execution of the modify process (hereinafter referred to as job element 28(5))
(6) An unassigned job element 28 which is not displayable in the unassigned area 25, even by execution of the modify process (hereinafter referred to as job element 28(6))

The display processing unit 93 is capable of displaying job elements 28 of the above types (1) to (6) in each of the schedule area 23 and the unassigned area 25. The job element 28(3) may be, for example, a job element configured by the user to not be displayed in the schedule area 23. Note that the job element 28(2) is one example of a first job element. The job element 28(3) is one example of a second job element.

### <Display of job elements 28 when a job element 28 is selected>

When a job element 28 is selected, the display processing unit 93 causes a job element 28 which is associated with the selected job element 28 and which is currently displayed in the display area 21 (hereinafter referred to as the already-displayed job element 28) to be displayed with a different display form than other job elements 28 (see Fig. 4).

Specifically, the display area 21 corresponds to the schedule area 23 and the unassigned area 25. The already-displayed job element 28 corresponds to the job elements 28(1) and 28(4) described above. The other job elements 28 are the job elements 28 not associated with the selected job element 28. Displaying with a different form may be, for example, an emphasis display in which the already-displayed job element 28 is displayed with greater emphasis than the other job elements 28. The emphasis display may be a display involving highlighting, for example. Note that in Figs. 4 and 5, emphasized job elements 28 are indicated by solid lines in the schedule area 23 and the unassigned area 25.

Note that displaying with a different form may also be such that the already-displayed job element 28 and the other job elements 28 are displayed in different forms by altering the background color, transparency, size, shape, display position, presence or absence of a mark, or the like between the already-displayed job element 28 and the other job elements 28.

The selection of a job element 28 is executed by, for example, the user using a pointing device, touch operation, or the like to select a job element 28 displayed in the schedule area 23 or the unassigned area 25 on the schedule screen 20.

Note that the selection of a job element 28 may also be executed by, for example, using the search command 39 to search for a job element 28 using a keyword or the like. The method used as the method of selecting a job element 28 may be any method capable of recognizing a user-given instruction for selecting a specific job element 28.

When a job element 28 is selected, as illustrated in Fig. 4, the display processing unit 93 causes a job element 28 which is associated with the selected job element 28 and which is not currently displayed in the display area 21 (hereinafter referred to as the non-displayed job element 28) to be displayed in the association list area 22. The non-displayed job element 28 corresponds to the job elements 28(2), 28(3), 28(5), and 28(6) described above.

When a job element 28 is selected, the display processing unit 93 further causes the already-displayed job element 28 to be displayed in the association list area 22, in addition to the non-displayed job element 28 (this display is referred to as display A).

In the case of display A, the display processing unit 93 causes the already-displayed job element 28 to be displayed in the association list area 22, with the display form for the display area 21. The already-displayed job element 28 is displayed in the association list area 22 such that the display form thereof, such as the background color, transparency, and shape, is the same form as the job element 28 currently displayed in the display area 21.

In the case of display A, the display processing unit 93 causes the already-displayed job element 28 and the non-displayed job element 28 to be displayed in the association list area 22, with different display forms. Displaying with different forms may be, for example, an emphasis display in which one of either the already-displayed job element 28 or the non-displayed job element 28 is displayed with greater emphasis than the other. The emphasis display may be a display involving highlighting, for example.

Furthermore, the already-displayed job element 28 and the non-displayed job element 28 may be displayed with different forms by altering the background color, transparency, size, shape, display position, presence or absence of a mark, or the like between the already-displayed job element 28 and the non-displayed job element 28. In Fig. 4, the non-displayed job elements 28 are displayed with shading, while the already-displayed job elements 28 are displayed without shading.

In the case where the non-displayed job element 28 includes the job element 28(2) and the job element 28(3), the display processing unit 93 causes the job element 28(2) and the job element 28(3) to be displayed in the association list area 22, with different display forms.

Displaying with different forms may be, for example, an emphasis display in which one of either the job element 28(2) or the job element 28(3) is displayed with greater emphasis than the other. The emphasis display may be a display involving highlighting, for example.

Furthermore, the job element 28(2) and the job element 28(3) may be displayed with different forms by altering the background color, transparency, size, shape, display position, presence or absence of a mark, or the like between the job element 28(2) and the job element 28(3). In Fig. 4, the job element 28(3) is displayed with an added mark 29, while the job element 28(2) is displayed without an added mark 29.

In the case where the non-displayed job element 28 includes the assigned job element 28 and the unassigned job element 28, the display processing unit 93 causes the assigned job element 28 and the unassigned job element 28 to be displayed in the association list area 22, with different display forms. The assigned job element 28 corresponds to the job elements 28(1), 28(2), and 28(3). The unassigned job element 28 corresponds to the job elements 28(4), 28(5), and 28(6).

Displaying with different forms may be, for example, an emphasis display in which one of either the assigned job element 28 or the unassigned job element 28 is displayed with greater emphasis than the other. The emphasis display may be a display involving highlighting, for example.

Furthermore, the assigned job element 28 and the unassigned job element 28 may be displayed with different forms by altering the background color, transparency, size, shape, display position, presence or absence of a mark, or the like between the assigned job element 28 and the unassigned job element 28. In Fig. 4, the unassigned job element 28(4) is displayed in a different field (that is, display position) than the assigned job elements 28(1), 28(2), and 28(3). The field in which the unassigned job element 28(4) is displayed is the partitioned upper field in the association list area 22.

When a job element 28 is selected and all job elements 28 associated with the selected job element 28 are currently displayed in the display area 21, the display processing unit 93 hides the association list area 22.

The display processing unit 93 displays job elements 28 as a list in the association list area 22. In the exemplary embodiment, the display processing unit 93 displays job elements 28 in a set order and in an arrangement in the vertical direction in the association list area 22. The vertical direction is one example of a predetermined direction.

For example, the order may be set by using one or more of the following <1> to <3> as criteria.
<1> Assigned to the execution schedule of the equipment 2, 4 or not
<2> Displayable in the display area 21 by execution of the modify process or not
<3> Classification of job pertaining to job element 28

When using <1> above as a criterion, the display processing unit 93 displays job elements 28 in the order of, for example, the assigned job elements 28 followed by the unassigned job elements 28, in an arrangement going upward or downward. In Fig. 4, the unassigned job element 28(4) is displayed in the uppermost position of the association list area 22.

When using <2> above as a criterion, the display processing unit 93 displays job elements 28 in the order of, for example, the job elements 28(2), 28(5), 28(3), 28(6), in an arrangement going upward or downward.

The criterion of <3> above may be a classification of as job details, equipment, worker, or the like. The classification of job details may be, for example, a classification of printing or processing, or the time required for the job. Also, when the job is printing, the classification of job details may be the type of printing, type of print medium, number of copies to print, number of pages to print, or the like. The classification of equipment may be, for example, a classification of printer or processing machine. The classification of worker may be, for example, a classification of the worker who is to carry out the job.

When using <3> above as a criterion, the display processing unit 93 displays job elements 28 in an arrangement in the vertical direction such that job elements 28 of the same classification are adjacent to each other.

Note that the example of the predetermined direction may also be the horizontal direction. That is, the display processing unit 93 may also display job elements 28 in an arrangement in the horizontal direction. The display processing unit 93 may also display job elements 28 in a two-dimensional arrangement. In this way, the display processing unit 93 is capable of displaying job elements 28 in a recognizable manner.

### <Display of job elements 28 when a job element 28 in the association list area 22 is selected>

When a job element 28 in the association list area 22 is selected and the selected job element 28 is not currently displayed in the schedule area 23, the display processing unit 93 changes the date and time 32 displayed in the schedule area 23 so that the relevant job element 28 is displayed in the schedule area 23.

For example, when the job element 28(2) not currently displayed in the schedule area 23 is selected in the association list area 22 illustrated in Fig. 4, the date and time 32 is changed so that the job element 28(2) is displayed, as illustrated in Fig. 5. Note that the same applies when the job element 28(3) is selected in the association list area 22 illustrated in Fig. 4. Note that the job elements 28(2) and 28(3) become job elements 28(1) as a result of being displayed in the schedule area 23.

The selection of a job element 28 is executed by, for example, the user using a pointing device, touch operation, or the like to select a job element 28 displayed in the association list area 22 on the schedule screen 20.

Note that the selection of a job element 28 may also be executed by, for example, using the search command 39 to search for a job element 28 using a keyword or the like. The method used as the method of selecting a job element 28 may be any method capable of recognizing a user-given instruction for selecting a specific job element 28.

When a job element 28 in the association list area 22 is selected and not all job elements 28 associated with the selected job element 28 are currently displayed in the schedule area 23, the display processing unit 93 changes the date and time 32 displayed in the schedule area 23 so that all relevant job elements 28 are displayed in the schedule area 23. Note that the changing of the date and time 32 is performed by the shift process or the scaling process.

In the example in Fig. 4, the job elements 28(2) and 28(3) associated with the job element 28(4) are not currently displayed in the schedule area 23. For this reason, if for example the job element 28(4) is selected in the association list area 22 illustrated in Fig. 4, the date and time 32 is changed so that the job elements 28(2) and 28(3) are displayed, as illustrated in Fig. 5.

When a job element 28 is selected in the association list area 22 and the selected job element 28 is an already-displayed job element 28, the display processing unit 93 displays the relevant already-displayed job element with a different display form than other already-displayed job elements 28.

If, for example, the job element 28(4) is selected in the association list area 22 illustrated in Fig. 4, the job element 28(4) is currently displayed in the unassigned area 25 and thus is displayed with a different display form than the other already-displayed job elements 28(4).

Displaying with a different form may be, for example, an emphasis display in which one of either the relevant job element 28(4) or the other job elements 28(4) are displayed with greater emphasis than the other. The emphasis display may be a display involving highlighting, for example.

Furthermore, the relevant job element 28(4) and the other job elements 28(4) may be displayed with different forms by altering the background color, transparency, size, shape, display position, presence or absence of a mark, or the like between the relevant job element 28(4) and the other job elements 28(4). In Fig. 5, the relevant job element 28(4) is displayed with an added mark 27, while the other job elements 28(4) are displayed without an added mark 27.

### <First display process according to exemplary embodiment>

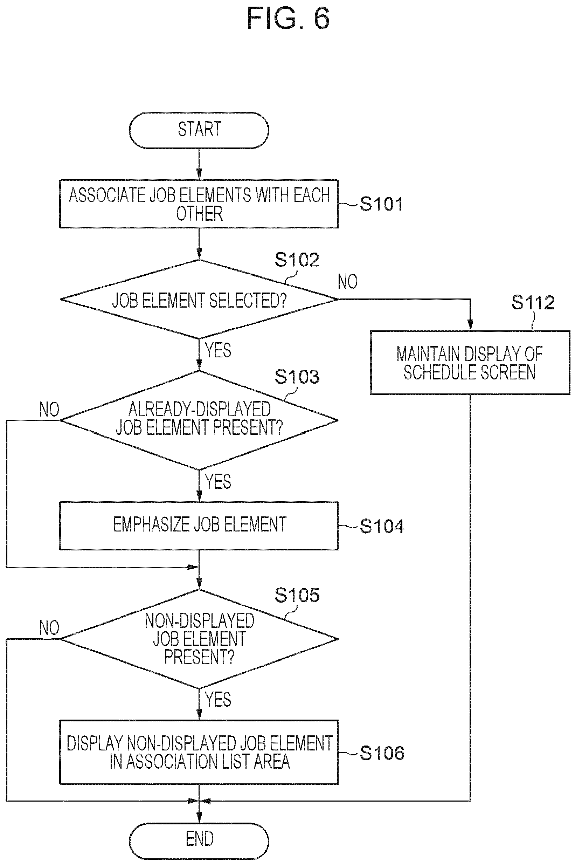

Next, an example of a first display process according to the exemplary embodiment will be described. Fig. 6 is a flowchart illustrating an example of the flow of the first display process executed by the production management system 10.

The process is performed by having the processor 11 read out and execute the processing program 12A from the storage 12. In one example, execution of the process by the processor 11 is started when the schedule screen 20 is displayed.

As illustrated in Fig. 6, when the process is started, the processor 11 associates job elements 28 that are displayable on the schedule screen 20 with each other (step S101). Specifically, the processor 11 associates job elements 28 pertaining to a series of job steps to be executed when producing specific printed material.

Next, the processor 11 determines whether or not a job element 28 that is displayable on the schedule screen 20 is selected (step S102). Upon determining that a relevant job element 28 is selected (step S102: YES), the processor 11 proceeds to step S103.

On the other hand, upon determining that a relevant job element 28 is not selected (step S102: NO), the processor 11 proceeds to step S112. In step S112, the processor 11 maintains the display of the schedule screen 20, and ends the process.

In step S103, the processor 11 determines whether or not an already-displayed job element 28 is present among the job elements 28 associated with the selected job element 28. Upon determining that an already-displayed job element 28 is present (step S103: YES), the processor 11 proceeds to step S104. In step S104, the processor 11 executes emphasis display of the already-displayed job element 28, and proceeds to step S105. Upon determining in step S103 that a relevant job element 28 is not present (step S103: NO), the processor 11 likewise proceeds to step S105.

In step S105, the processor 11 determines whether or not a non-displayed job element 28 is present among the job elements 28 associated with the selected job element 28. Upon determining that a non-displayed job element 28 is present (step S105: YES), the processor 11 proceeds to step S106. In step S106, the processor 11 displays the non-displayed job element 28 in the association list area 22, and ends the process. Upon determining in step S105 that a non-displayed job element 28 is not present (step S105: NO), the processor 11 likewise ends the process.

### <Second display process according to exemplary embodiment>

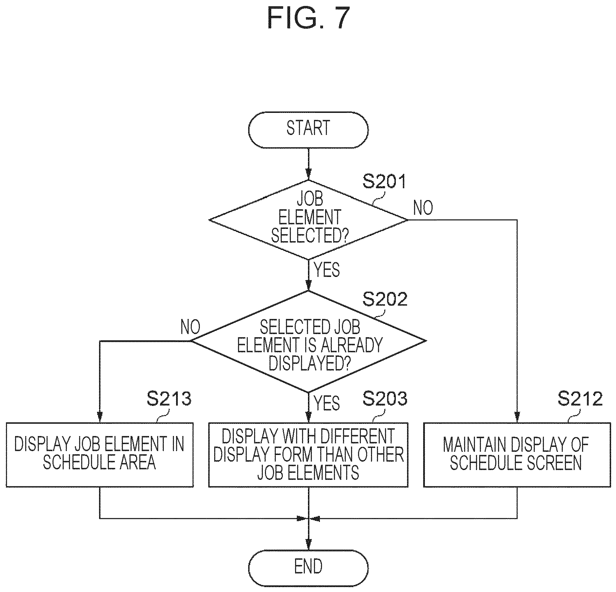

Next, an example of a second display process according to the exemplary embodiment will be described. Fig. 7 is a flowchart illustrating an example of the flow of the second display process executed by the production management system 10.

The process is performed by having the processor 11 read out and execute the processing program 12A from the storage 12. In one example, execution of the process by the processor 11 is started when the association list area 22 is displayed on the schedule screen 20 in the first display process.

As illustrated in Fig. 7, when the process is started, the processor 11 determines whether or not a job element 28 is selected in the association list area 22 (step S201). Upon determining that a relevant job element 28 is selected (step S201: YES), the processor 11 proceeds to step S202.

On the other hand, upon determining that a relevant job element 28 is not selected (step S201: NO), the processor 11 proceeds to step S212. In step S212, the processor 11 maintains the display of the schedule screen 20, and ends the process.

In step S202, the processor 11 determines whether or not the selected job element 28 is currently displayed in the schedule area 23. Upon determining that the selected job element 28 is currently displayed in the schedule area 23 (step S202: YES), the processor 11 proceeds to step S203. In step S203, the processor 11 displays the relevant already-displayed job element 28 with a different display form than other already-displayed job elements 28, and ends the process.

On the other hand, upon determining in step S202 that the selected job element 28 is not currently displayed in the schedule area 23 (step S202: NO), the processor 11 proceeds to step S213. In step S213, the processor 11 changes the date and time 32 displayed in the schedule area 23 so that the selected job element 28 is displayed in the schedule area 23, and ends the process.

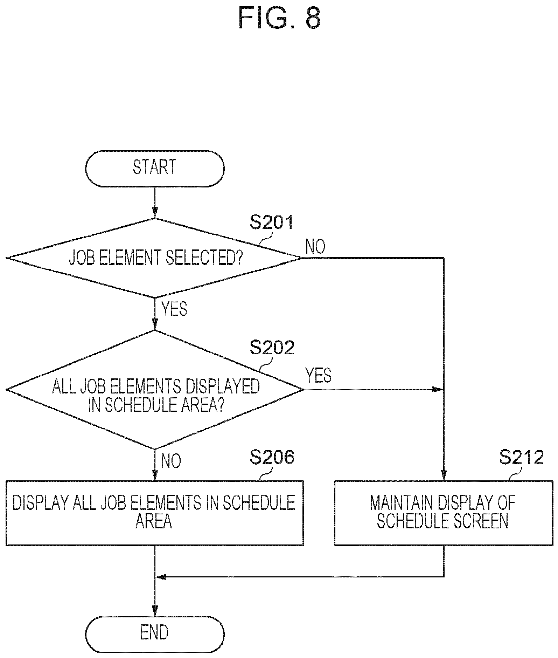

Note that, as illustrated in Fig. 8, in step S202, the processor 11 may also determine whether or not all job elements 28 associated with the selected job element 28 are currently displayed in the schedule area 23. Upon determining that all job elements 28 associated with the selected job element 28 are currently displayed in the schedule area 23 (step S202: YES), the processor 11 proceeds to step S212.

On the other hand, upon determining that not all job elements 28 associated with the selected job element 28 are currently displayed in the schedule area 23 (step S202: NO), the processor 11 proceeds to step S206. In step S206, the processor 11 changes the date and time 32 displayed in the schedule area 23 so that all relevant job elements 28 are displayed in the schedule area 23, and ends the process.

### <Action according to exemplary embodiment>

According to the exemplary embodiment, when a job element 28 is selected, the processor 11 displays an already-displayed job element 28 associated with the selected job element 28 with a different display form than other job elements. Furthermore, when a job element 28 is selected, the processor 11 displays a non-displayed job element 28 associated with the selected job element 28 in the association list area 22.

In consequence, the user more easily recognizes a job element 28 associated with the selected job element 28, as compared to the case where, when a job element 28 is selected, the processor 11 executes only a process causing an already-displayed job element associated with the selected job element 28 to be displayed with a different form than other job elements.

According to the exemplary embodiment, the processor 11 displays the job element 28(2) and the job element 28(3) in the association list area 22, with different display forms.

In consequence, the user more easily distinguishes between the job element 28(2) and the job element 28(3), as compared to the case where the processor 11 displays the job element 28(2) and the job element 28(3) in the association list area 22, with the same display form.

According to the exemplary embodiment, when a job element 28 is selected, the processor 11 further displays an already-displayed job element 28 in the association list area 22.

In consequence, the user more easily recognizes the already-displayed job element 28, as compared to the case where, when a job element 28 is selected, the processor 11 displays only a non-displayed job element 28 in the association list area 22.

According to the exemplary embodiment, when a job element 28 is selected, the processor 11 displays an already-displayed job element 28 in the association list area 22, with the display form for the display area 21.

In consequence, the user more easily recognizes the commonality between the already-displayed job element displayed in the display area 21 and the already-displayed job element displayed in the association list area 22, as compared to the case where the processor 11 displays the already-displayed job element 28 in the association list area 22, with a different display form than the display form for the display area 21.

According to the exemplary embodiment, the display area 21 includes the schedule area 23 for displaying the status of job elements 28 assigned in the execution schedule of the equipment 2, 4 and the unassigned area 25 for displaying unassigned job elements 28.

In consequence, the user more easily recognizes already-displayed job elements 28 displayed in each of the schedule area 23 and the unassigned area 25, as compared to the case where the display area 21 includes only the schedule area 23.

According to the exemplary embodiment, the processor 11 displays an assigned job element 28 and an unassigned job element 28 in the association list area 22, with different display forms.

In consequence, the user more easily distinguishes between the assigned job element and the unassigned job element, as compared to the case where the processor 11 displays the assigned job element and the unassigned job element in the association list area 22, with the same display form.

According to the exemplary embodiment, the processor 11 displays an already-displayed job element 28 and a non-displayed job element 28 in the association list area 22, with different display forms.

In consequence, the user more easily distinguishes between the already-displayed job element 28 and the non-displayed job element 28, as compared to the case where the processor 11 displays the already-displayed job element 28 and the non-displayed job element 28 in the association list area 22, with the same display form.

According to the exemplary embodiment, the processor 11 displays job elements 28 in a set order and in an arrangement in a predetermined direction in the association list area 22.

In consequence, the user more easily recognizes a job element 28 associated with a selected job element 28, as compared to the case where the processor 11 displays the job elements 28 in any order and in an arrangement in any direction.

According to the exemplary embodiment, when a job element 28 in the association list area 22 is selected and the selected job element 28 is not currently displayed in the schedule area 23, the processor 11 changes the date and time 32 displayed in the schedule area 23 so that the relevant job element 28 is displayed in the schedule area 23.

In consequence, the user more easily recognizes the relevant job element 28, as compared to the case where, when a job element 28 in the association list area 22 is selected and the selected job element 28 is not currently displayed in the schedule area 23, the processor 11 maintains the non-display of the relevant job element 28 in the schedule area 23.

According to the exemplary embodiment, when a job element 28 in the association list area 22 is selected and not all job elements 28 associated with the selected job element 28 are currently displayed in the schedule area 23, the processor 11 changes the date and time 32 displayed in the schedule area 23 so that all relevant job elements 28 are displayed in the schedule area 23.

In consequence, the user more easily recognizes the relevant job elements 28, as compared to the case where, when a job element 28 in the association list area 22 is selected and not all job elements 28 associated with the selected job element 28 are currently displayed in the schedule area 23, the processor 11 displays only some of the relevant job elements 28 in the schedule area 23.

According to the exemplary embodiment, when a job element 28 is selected in the association list area 22 and the selected job element 28 is an already-displayed job element 28, the processor 11 displays the relevant already-displayed job element with a different display form than other already-displayed job elements 28.

In consequence, the user more easily recognizes the relevant already-displayed job element 28, as compared to the case where, when a job element 28 is selected in the association list area 22 and the selected job element 28 is an already-displayed job element 28, the processor 11 maintains the display of the relevant already-displayed job element 28.

According to the exemplary embodiment, when all job elements 28 associated with a selected job element 28 are currently displayed in the display area 21, the processor 11 hides the association list area 22.

In consequence, the display area 21 is expanded on the schedule screen 20, as compared to the case where the processor 11 keeps displaying the association list area 22.

### <Exemplary modifications>

According to the exemplary embodiment, the processor 11 displays the job element 28(2) and the job element 28(3) in the association list area 22, with different display forms, but is not limited thereto. For example, the processor 11 may also display the job element 28(2) and the job element 28(3) in the association list area 22, with the same display form.

According to the exemplary embodiment, when a job element 28 is selected, the processor 11 further displays an already-displayed job element 28 in the association list area 22, but is not limited thereto. For example, when a job element 28 is selected, the processor 11 may also display only a non-displayed job element 28 in the association list area 22. When a job element 28 is selected, the processor 11 may display at least a non-displayed job element 28 in the association list area 22.

According to the exemplary embodiment, when a job element 28 is selected, the processor 11 displays an already-displayed job element 28 in the association list area 22, with the display form for the display area 21, but is not limited thereto. For example, the processor 11 may also display an already-displayed job element 28 in the association list area 22, with a different display form than the display form for the display area 21.

According to the exemplary embodiment, the display area 21 includes the schedule area 23 and the unassigned area 25, but is not limited thereto. For example, the display area 21 may also be configured to include only the schedule area 23.

According to the exemplary embodiment, the processor 11 displays an assigned job element 28 and an unassigned job element 28 in the association list area 22, with different display forms, but is not limited thereto. For example, the processor 11 may also display an assigned job element and an unassigned job element in the association list area 22, with the same display form.

According to the exemplary embodiment, the processor 11 displays an already-displayed job element 28 and a non-displayed job element 28 in the association list area 22, with different display forms, but is not limited thereto. For example, the processor 11 may also display an already-displayed job element 28 and a non-displayed job element 28 in the association list area 22, with the same display form. As above, the display form when displaying job elements 28 in the association list area 22 is not limited to a specific display form.

According to the exemplary embodiment, the processor 11 displays job elements 28 in a set order and in an arrangement in a predetermined direction in the association list area 22, but is not limited thereto. For example, the processor 11 may also display job elements 28 in any order and in an arrangement in any direction.

According to the exemplary embodiment, when a job element 28 in the association list area 22 is selected and the selected job element 28 is not currently displayed in the schedule area 23, the processor 11 changes the date and time 32 displayed in the schedule area 23 so that the relevant job element 28 is displayed in the schedule area 23, but is not limited thereto. For example, in the above case, the non-display of the relevant job element 28 in the schedule area 23 may be maintained.

According to the exemplary embodiment, when a job element 28 in the association list area 22 is selected and not all job elements 28 associated with the selected job element 28 are currently displayed in the schedule area 23, the processor 11 changes the date and time 32 displayed in the schedule area 23 so that all relevant job elements 28 are displayed in the schedule area 23, but is not limited thereto. For example, in the above case, only some of the relevant job elements 28 may be displayed in the schedule area 23.

According to the exemplary embodiment, when a job element 28 is selected in the association list area 22 and the selected job element 28 is an already-displayed job element 28, the processor 11 displays the relevant already-displayed job element with a different display form than other already-displayed job elements 28, but is not limited thereto. For example, in the above case, the display of the relevant already-displayed job element 28 may be maintained.

According to the exemplary embodiment, when all job elements 28 associated with a selected job element 28 are currently displayed in the display area 21, the processor 11 hides the association list area 22, but is not limited thereto. For example, when all job elements 28 associated with a selected job element 28 are currently displayed in the display area 21, the processor 11 may keep displaying the association list area 22.

The present disclosure is not limited to the exemplary embodiment above, and various modifications, alterations, and improvements are possible without deviating from the gist of the present disclosure. For example, the exemplary modifications described above may also be plurally combined, as appropriate.

In the exemplary embodiment, the term "processor" refers to hardware in a broad sense. Examples of the processor include general processors (e.g., CPU: Central Processing Unit), dedicated processors (e.g., GPU: Graphics Processing Unit, ASIC: Application Integrated Circuit, FPGA: Field Programmable Gate Array, and programmable logic device).

In the exemplary embodiment above, the term "processor" is broad enough to encompass one processor or plural processors in collaboration which are located physically apart from each other but may work cooperatively. The order of operations of the processor is not limited to one described in the exemplary embodiment above, and may be changed.

Also, although the production management system 10 in the exemplary embodiment is configured as a single device, for example, the configuration is not limited thereto. An information processing system according to an exemplary embodiment of the present disclosure may also be configured as multiple devices. In other words, a "system" in the exemplary embodiment may be a configuration formed by multiple devices or a configuration formed by a single device. Furthermore, the present disclosure is also applicable to not only a program but also a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### (Appendix)

(((1))) An information processing system comprising a processor configured to:
   display, in a first display area on a display, a plurality of job elements representing details of jobs;
   associate the job elements with each other; and
   when a job element is selected, display an already-displayed job element, which is associated with the selected job element and which is currently displayed in the first display area, with a different display form than other job elements not associated with the selected job element, and display a non-displayed job element, which is associated with the selected job element and which is not currently displayed in the first display area, in a second display area on the display.
(((2))) The information processing system according to (((1))), wherein:
   the first display area includes at least a schedule area for displaying the status of job elements that are assigned in an execution schedule of equipment capable of executing the jobs,
   the non-displayed job element includes:
      a first job element that is displayable in the schedule area by execution of a modify process to modify a period displayed in the schedule area; and
      a second job element that is not displayable in the schedule area, even by execution of the modify process, and
   the processor is configured to display the first job element and the second job element in the second display area, with different display forms.
(((3))) The information processing system according to (((1))) or (((2))), wherein the processor is configured to, when a job element is selected, further display the already-displayed job element in the second display area.
(((4))) The information processing system according to (((3))), wherein the processor is configured to, when a job element is selected, display the already-displayed job element in the second display area, with the display form for the first display area.
(((5))) The information processing system according to (((4))), wherein the first display area includes:
   a schedule area for displaying the status of job elements that are assigned in an execution schedule of equipment capable of executing the jobs; and
   an unassigned area for displaying job elements that are not assigned in the execution schedule.
(((6))) The information processing system according to (((5))), wherein the processor is configured to display an assigned job element that is assigned in the execution schedule and an unassigned job element that is not assigned in the execution schedule in the second display area, with different display forms.
(((7))) The information processing system according to any one of (((3))) to (((6))), wherein the processor is configured to display the already-displayed job element and the non-displayed job element in the second display area, with different display forms.
(((8))) The information processing system according to any one of (((1))) to (((7))), wherein the processor is configured to display the job elements in a set order and in an arrangement in a predetermined direction in the second display area.
(((9))) The information processing system according to any one of (((1))) to (((8))), wherein:
   the first display area includes a schedule area for displaying the status of job elements that are assigned in an execution schedule of equipment capable of executing the jobs; and
   the processor is configured to, when a job element in the second display area is selected and the selected job element is not currently displayed in the schedule area, change the period displayed in the schedule area so that the relevant job element is displayed in the schedule area.
(((10))) The information processing system according to (((9))), wherein the processor is configured to, when a job element in the second display area is selected and all job elements associated with the selected job element are not currently displayed in the schedule area, change the period displayed in the schedule area so that all relevant job elements are displayed in the schedule area.
(((11))) The information processing system according to (((9))) or (((10))), wherein the processor is configured to, when a job element is selected in the second display area and the selected job element is an already-displayed job element, display the relevant already-displayed job element with a different display form than other already-displayed job elements.
(((12))) The information processing system according to any one of (((1))) to (((11))), wherein the processor is configured to, when a job element is selected and all job elements associated with the selected job element are currently displayed in the first display, hide the second display area.
(((13))) An information processing program causing a computer to execute a process comprising:
   displaying, in a first display area on a display, a plurality of job elements representing details of jobs;
   associating the job elements with each other; and
   when a job element is selected, displaying an already-displayed job element, which is associated with the selected job element and which is currently displayed in the first display area, with a different display form than other job elements not associated with the selected job element, and displaying a non-displayed job element, which is associated with the selected job element and which is not currently displayed in the first display area, in a second display area on the display.

According to the configuration of (((1))), user recognition of a job element associated with a selected job element is facilitated, as compared to the case where, when a job element is selected, the processor executes only a process causing a job element which is associated with the selected job element and which is currently displayed in the display area to be displayed with a different form than other job elements not associated with the selected job element.

According to the configuration of (((2))), the user more easily distinguishes between the first job element and the second job element, as compared to the case where the processor displays the first job element and the second job element in the second display area, with the same display form.

According to the configuration of (((3))), the user more easily recognizes the already-displayed job element, as compared to the case where, when a job element is selected, the processor displays only a non-displayed job element in the second display area.

According to the configuration of (((4))), the user more easily recognizes the commonality between the already-displayed job element displayed in the first display area and the already-displayed job element displayed in the second display area, as compared to the case where the processor displays the already-displayed job element in the second display area, with a different display form than the display form for the first display area.

According to the configuration of (((5))), the user more easily recognizes already-displayed job elements displayed in each of the schedule area and the unassigned area, as compared to the case where the first display area includes only the schedule area.

According to the configuration of (((6))), the user more easily distinguishes between the assigned job element and the unassigned job element, as compared to the case where the processor displays the assigned job element and the unassigned job element in the second display area, with the same display form.

According to the configuration of (((7))), the user more easily distinguishes between the already-displayed job element and the non-displayed job element, as compared to the case where the processor displays the already-displayed job element and the non-displayed job element in the second display area, with the same display form.

According to the configuration of (((8))), the user more easily recognizes a job element associated with a selected job element, as compared to the case where the processor displays the job elements in any order and in an arrangement in any direction.

According to the configuration of (((9))), the user more easily recognizes the relevant job element, as compared to the case where, when a job element in the second display area is selected and the selected job element is not currently displayed in the schedule area, the processor maintains the non-display of the relevant job element in the schedule area.

According to the configuration of (((10))), the user more easily recognizes the relevant job elements, as compared to the case where, when a job element in the second display area is selected and not all job elements associated with the selected job element are currently displayed in the schedule area, the processor displays only some of the relevant job elements in the schedule area.

According to the configuration of (((11))), the user more easily recognizes the relevant already-displayed job element, as compared to the case where, when a job element 28 is selected in the second display area and the selected job element is an already-displayed job element, the processor maintains the display of the relevant already-displayed job element.

According to the configuration of (((12))), the first display area is expanded on the display, as compared to the case where the processor keeps displaying the second display area.

According to the configuration of (((13))), user recognition of a job element associated with a selected job element is facilitated, as compared to the case where, when a job element is selected, the computer executes only a process causing a job element which is associated with the selected job element and which is currently displayed in the display area to be displayed with a different form than other job elements not associated with the selected job element.

## Claims

1. An information processing system comprising:
a processor configured to:
display, in a first display area on a display, a plurality of job elements representing details of jobs;
associate the job elements with each other; and
when a job element is selected, display an already-displayed job element, which is associated with the selected job element and which is currently displayed in the first display area, with a different display form than other job elements not associated with the selected job element, and display a non-displayed job element, which is associated with the selected job element and which is not currently displayed in the first display area, in a second display area on the display.

2. The information processing system according to claim 1, wherein:
the first display area includes at least a schedule area for displaying the status of job elements that are assigned in an execution schedule of equipment capable of executing the jobs;
the non-displayed job element includes:
a first job element that is displayable in the schedule area by execution of a modify process to modify a period displayed in the schedule area; and
a second job element that is not displayable in the schedule area, even by execution of the modify process; and
the processor is configured to display the first job element and the second job element in the second display area, with different display forms.

3. The information processing system according to claim 1 or 2, wherein the processor is configured to, when a job element is selected, further display the already-displayed job element in the second display area.

4. The information processing system according to claim 3, wherein the processor is configured to, when a job element is selected, display the already-displayed job element in the second display area, with the display form for the first display area.

5. The information processing system according to claim 4, wherein the first display area includes
a schedule area for displaying the status of job elements that are assigned in an execution schedule of equipment capable of executing the jobs, and
an unassigned area for displaying job elements that are not assigned in the execution schedule.

6. The information processing system according to claim 5, wherein the processor is configured to display an assigned job element that is assigned in the execution schedule and an unassigned job element that is not assigned in the execution schedule in the second display area, with different display forms.

7. The information processing system according to any one of claims 3 to 6, wherein the processor is configured to display the already-displayed job element and the non-displayed job element in the second display area, with different display forms.

8. The information processing system according to any one of claims 1 to 7, wherein the processor is configured to display the job elements in a set order and in an arrangement in a predetermined direction in the second display area.

9. The information processing system according to any one of claims 1 to 8, wherein:
the first display area includes a schedule area for displaying the status of job elements that are assigned in an execution schedule of equipment capable of executing the jobs; and
the processor is configured to, when a job element in the second display area is selected and the selected job element is not currently displayed in the schedule area, change the period displayed in the schedule area so that the relevant job element is displayed in the schedule area.

10. The information processing system according to claim 9, wherein the processor is configured to, when a job element in the second display area is selected and all job elements associated with the selected job element are not currently displayed in the schedule area, change the period displayed in the schedule area so that all relevant job elements are displayed in the schedule area.

11. The information processing system according to claims 9 or 10, wherein the processor is configured to, when a job element is selected in the second display area and the selected job element is an already-displayed job element, display the relevant already-displayed job element with a different display form than other already-displayed job elements.

12. The information processing system according to any one of claims 1 to 11, wherein the processor is configured to, when a job element is selected and all job elements associated with the selected job element are currently displayed in the first display, hide the second display area.

13. An information processing method comprising:
displaying, in a first display area on a display, a plurality of job elements representing details of jobs;
associating the job elements with each other; and
when a job element is selected, displaying an already-displayed job element, which is associated with the selected job element and which is currently displayed in the first display area, with a different display form than other job elements not associated with the selected job element, and displaying a non-displayed job element, which is associated with the selected job element and which is not currently displayed in the first display area, in a second display area on the display.

14. An information processing program causing a computer to execute a process comprising:
displaying, in a first display area on a display, a plurality of job elements representing details of jobs;
associating the job elements with each other; and
when a job element is selected, displaying an already-displayed job element, which is associated with the selected job element and which is currently displayed in the first display area, with a different display form than other job elements not associated with the selected job element, and displaying a non-displayed job element, which is associated with the selected job element and which is not currently displayed in the first display area, in a second display area on the display.
